(19)

Europäisches
Patentamt
European
Patent Office
Office européen
des brevets

(11) **EP 3 035 262 A1**

(12) **EUROPEAN PATENT APPLICATION**

(43) Date of publication:
**22.06.2016 Bulletin 2016/25**

(51) Int Cl.:
**G06Q 10/10** *(2012.01)*

(21) Application number: **14198465.8**

(22) Date of filing: **17.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Advanced Digital Broadcast S.A.
1292 Chambesy (CH)**

(72) Inventor: **Dabrowski, Bartosz
65-119 Zielona Gora (PL)**

(74) Representative: **Eupatent.pl
ul. Zeligowskiego 3/5
90-752 Lodz (PL)**

(54) **A system and a method for learning of a resource management system using quantified groups of properties**

(57)    A computer-implemented method for collecting and adopting data for a learning of an entity, the method comprising the steps of: determining (201) the number (M) of epochs (203); recording (202) the system state (160, 170) of properties (181, 191) at least once during each epoch (203), wherein (M) number of epochs are performed; counting (205) how many times each property changed across all the epochs; dividing (206) all of the properties contained in the system into a number of (G) groups (208); translating (210) the groups (207) into factors; creating (211) a threshold factor; creating (212) an output measurement; and applying (213) a learning method.

Fig. 1

**Description**

TECHNICAL FIELD

The present invention relates to a system and a method for collecting and adopting data for a learning of an entity which comprises a method of collection of this data. A method of quantification and a method of adaptation for the learning process is provided.

BACKGROUND

The present invention relates mainly to large complex systems containing large numbers of properties or settings or such that need to or can be managed in a homogenous way. A method of approaching such management has been disclosed in a pending European application EP14198454.2. It provides a description of approaching this management in a manner not requiring any knowledge whatsoever about the nature of the managed properties or their inherent volatility. A computer-implemented method for adaptive management of resources disclosed therein comprises the steps of: detecting a change of a property of a resource; creating a property change record; storing the property change record in a history of changes database in a history storage; retrieving the history of changes database from the history storage; computing a collective significance of the history of changes database; comparing the collective significance of the history of changes database against a threshold of resource; and checking whether the result of the comparison constitutes a trigger for an event and if so, executing the event.

Prior art describes a method and an exemplary system for such management in detail along with an exemplary embodiment of a process of operation of the system. However, prior art assumes parameters of this process and system arbitrarily or attempts to provide example of deduction of their values based on pre-existing assumptions.

A US patent US8266291 discloses dynamic property volatility assignment and assessment for distributed manageable resources, including determining whether a property value of a remote resource has an associated volatility measurement. In response to determining that the property value of the remote resource has the associated volatility measurement, a network transaction is invoked to retrieve the property value at an interval that is less than or equal to the associated volatility measurement. In response to determining that the property value of the remote resource does not include the associated volatility measurement, a frequency-based assessment is performed comparing a frequency of change and a frequency of access for the property value. Caching the property value is performed in response to comparing the frequency-based assessment to a threshold value.

In reality it might prove inadequate or even impossible to deduce those values. Hence there is a need to be able for the system to develop them without the prior knowledge of any inherent quality of the said. The present invention provides a method of approaching this problem.

SUMMARY

There is dicslosed a computer-implemented method for collecting and adopting data for a learning of an entity, the method comprising the steps of: determining the number (M) of epochs; recording the system state of properties at least once during each epoch, wherein (M) number of epochs are performed; counting how many times each property changed across all the epochs; dividing all of the properties contained in the system into a number of (G) groups; translating the groups into factors; creating a threshold factor; creating an output measurement; and applying a learning method.

Preferably, the recorded system state comprises properties IDs and their values.

Preferably, counting is performed using a comparator.

Preferably, the result of counting is in form of a non-volatile record in the system storage comprising a list of all properties and their respective change counts.

Preferably, each group is a set of properties and contains those properties whose number of changes across epochs meets criteria of that group.

Preferably, the properties are divided into equally divided groups in the following manner:

group 1: $0 \leq c < M/G$
group 2: $M/G \leq c < 2M/G$
group G: $(G - 1)M/G \leq c \leq M,$

wherein $c$ indicates the number of changes across all epochs.

Preferably, the output measurement is backup frequency or backup size or a size of an incremental backups.

Preferably, the learning method is a specific experiment scheme selected from Design of Experiment theory.

Preferably, the learning method is implemented by a neural network or a genetic algorithm.

There is also disclosed a computer program comprising program code means for performing all the steps of the computer-implemented method as described above when said program is run on a computer, as well as a computer readable medium storing computer-executable instructions performing all the steps of the computer-implemented method as described above when executed on a computer.

There is also disclosed a system for collecting and adopting data for a learning of an entity, the system comprising: a resource provider providing properties; a storage configured to store states of properties; a time resource configured to be utilized for the purpose of creating subsequent epochs; a function resource configured to count changes of properties; and a controller configured to perform the steps of the method as described above.

Preferably, the function resource comprises a comparator configured to compare two or more values of properties and provide a result determining whether the values are same or different.

BRIEF DESCRIPTION OF DRAWINGS

The present invention is shown by means of example embodiments on a drawing, in which:

Fig. 1 shows an example of a system for learning of a resource management system;
Fig. 2 shows an example of a method for learning of a resource management system.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

DETAILED DESCRIPTION

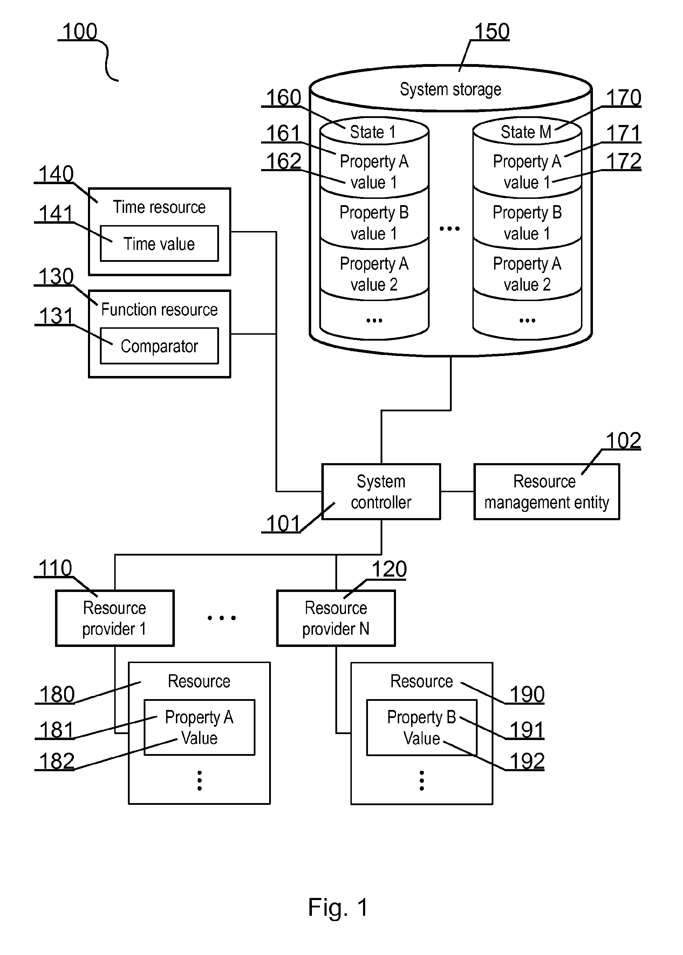

An example embodiment of the present invention provides a method of collecting and adopting data for a learning of an entity 102 which comprises a method of collection of this data, a method of quantification and a method of adaptation for the learning process. An exemplary embodiment of a system 100 implementing this method is depicted in Fig. 1.

The system 100 is designed as a service to an external or internal entity 102 which means that it provides a method of adaptation of a learning process to an entity 102 that can be the system 100 itself, but can be a similar external system or an abstract set of data or the like.

The system 100 includes one or more resource providers 110, 120 which provide access to specific resources 180, 190. The resources 180, 190 provide properties 181, 191. The resource providers 110, 120 can be remote and connected to the system through a network which can be the Internet, Ethernet or the like. However the usage of the word 'connected' is in no way limiting to this invention as the resource providers 110, 120 can be part of the system or be emulated entities or connected to the entity 102 and shared with system or the like.

The system is operated by a controller 101 that can access the properties 181, 191 provided respectively by resources 180, 190 and read the values 182, 192. These values can be a number, text, meta-data, Boolean value or the like. The values can be read via any means, for instance can be periodically polled or subscribed to or the like. Exemplary embodiment of such reading can be found in prior art.

The system 100 contains storage 150. The storage 150 can be a database or a hard drive device or a remote resource or the like. The system storage 150 is capable of storing states 160, 170 of properties 181, 191. It shall be noted that reference 181 relates to a property object and reference 161 relates to the object itself or the object ID. The states 160, 170 are sets of property IDs 161-171 and their values 162-172. This set can be a sequence, an unordered set or the like. The property ID can be any entity unambiguously identifying a property in the system. This can be a text interpreted as a path on a file system or an URI for a remote resource and property or an index or the like.

The system is equipped or otherwise can use in any manner a time resource 140 providing a time value 141. An example embodiment of such time resource 140 can be a real time clock. It is in no way limiting to this invention whether the time value 141 is a real time representation or a number of epochs of any kind or a number of actions or changes of any kind or the like. This time value 141 is used for the purpose of creating subsequent epochs 203. It is in no way limiting to this invention if the time resource 140 and/or time value 141 are used for other purposes as well.

The system includes or otherwise can use in any manner a function resource 130 containing a comparator 131. This comparator is used to compare two or more values of settings and provide a result determining whether the values are same or different. It is in no way limiting to this invention whether the comparator can compare two or more values and whether the provided result is a simple Boolean value or a more complex one.

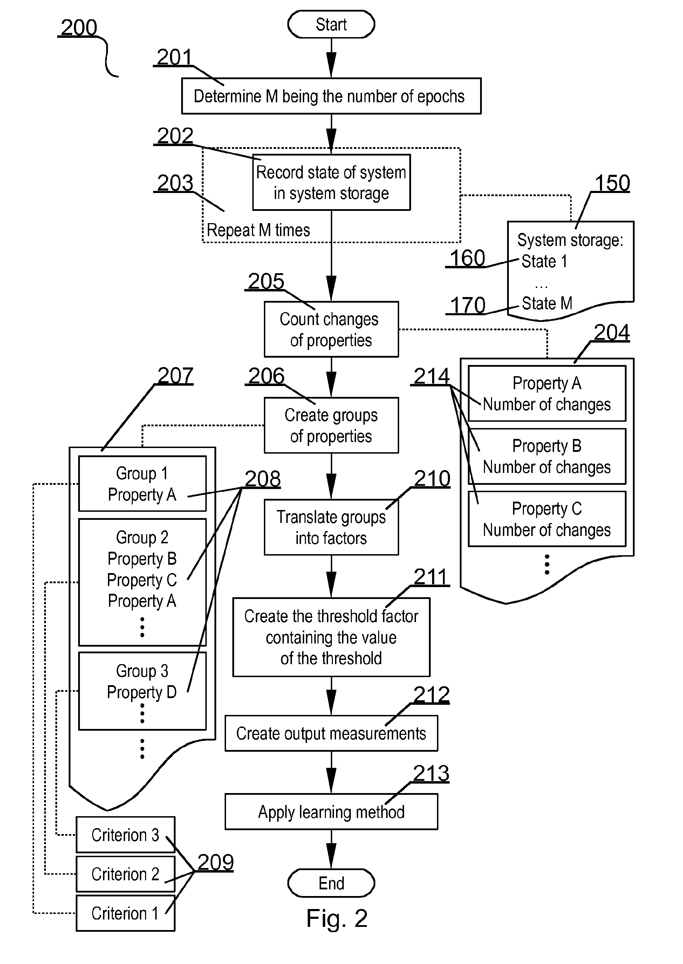

Fig. 2 shows how the described system controller 101 realizes the said adaptation methods. The process shown in Fig. 2 constitutes an exemplary embodiment of the operation of the exemplary system controller 101 in reference to the example embodiment described in this invention. The process is executed once for every time that the adaptation of the properties is needed for the purpose of learning.

The method of quantification 200 of properties begins at step 201 with determining the number M being the number of epochs 203 that the system uses to prepare for integration with a learning method. This number can be arbitrarily set or arbitrarily restricted or selected at random or the like. It is obvious to a one skilled in the art that more epochs mean more adequate process when stabilizing target values. This applies to the present invention as well. However this number is usually restricted by either time or cost or computation power or the like. The system performs M epochs 203. Each epoch comprises one or more steps 202 of storing of the system state 160, 170 in the system storage 150. After all epochs 203 are complete the system counts at step 205 how many times each property changed across all the epochs. The comparator 131 contained in the resource 130 is used for that purpose. A sample embodiment of such count may be a non-volatile record 204 in the system's storage 150 containing a list of all properties and their respective change counts 214. At step 206 the system then divides all of the properties contained in the system into a number of G groups 207. This number can be determined arbitrarily or selected at random or restricted by the conditions the system operates in or the like. It is obvious to a one skilled in the art that less then M groups can be created and more provide no added value. In practice this number may be limited by time, cost or the like, which is in no way limiting to this invention. Each group 208 is a set of properties and contains those properties whose number of changes across epochs meets criteria 209 of that group. A sample embodiment of such division may be splitting of the properties into equally divided groups in the following manner:

group1: $0 \leq c < {}^M/_G$
group 2: ${}^M/_G \leq c < {}^{2M}/_G$
...
group G: $(G - 1){}^M/_G \leq c \leq M,$

where $c$ indicates the number of changes across all epochs.

It is obvious to a one skilled in the art that in most cases the presence of the same property in more then one group provides no advantage. However it is in no way limiting to this invention whether any property can or cannot be included in more the one group.

The system then translates the groups 207 into factors at step 210. Each group may be translated into one or more factors. Factors can be of a numeric nature or a Boolean value or the like. A sample embodiment of a factor may comprise a variable of a value from range [0,1] stating directly a priority value of that group. Therefore a factor comprises of a name and a definition of possible values of that factor. The system creates at step 211 another factor being the value of a threshold. The threshold 121 can be a predefined number, a function or external resource or the like. The step 211 can in fact create factors for many parameters of the entity 102. The usage of this particular one is in no way limiting to this invention and serves better understanding and provides a direct relation to prior art thus strengthening the justification of the usage of the present invention.

At step 212 the system creates an output measurement of the learned system. This output may be interpreted as efficiency or quality of service or the like. This measurement can be backup frequency or backup size or a size of an incremental backups or the like. These factors and the output measurement provide an integration point for a learning method of the entity 102 and applied at step 213. The learning method can be a specific experiment scheme selected from Design of Experiment theory or can be implemented by a neural network or a genetic algorithm or the like. It is in no way limiting to this invention how the method of learning applies the created factors or how the factors are further adjusted to fit this method. The learning method may be applied to new data collected in newly created and/or designed epochs or can be a simulation over the existing system storage 151 or the like.

Implementation example

An exemplary embodiment may comprise a desktop system holding besides its functionality a number of settings changed by its users. These include display resolution, systems start-up configuration, mail server settings and many more. In general all of them can be represented by a vector:

$$S = [s_1, s_2, \ldots, s_n], n \in \mathbb{N}$$

In such approach the elements of the vector constitute the identification of the settings whose sense is e.g. mail server name or resolution or the like. However the system does not need to know this sense until a specific action is undertaken as a result of its operation. In this example this specific action is an incremental backup of the settings. An exemplary change incoming to the system is a change of display resolution. As a result of processing the change a change record is created. This is represented by a pair:

$$c = (s', t), s' \in S \text{ and } t - time \text{ of change}$$

This example uses a real time clock to define the time value and records the time of occurrence of change within the history as indicated by the above definition. The value t is interpreted as a number of hours since system start. Subsequent changes create a history of change within the system represented by a vector:

$$H = \left[ \left( s'_1, t_1 \right), \left( s'_2, t_2 \right), \ldots, \left( s'_h, t_h \right) \right], h \in \mathbb{N} \text{ and } \forall i, j \in \{1, \ldots, h\} \wedge i < j : t_i < t_j$$

This example contains a priority function that assumes the following:

Any change that occurs after 30 days or more since last change of the same setting has assigned a significance number of 1.
Any change that occurs after less than 30 days since last change of the same setting and more than 1 day since last change of the same setting has a significance number assigned of 0.1.
Any change that occurs after 1 day or less since last change of the same setting has a significance number assigned of 0.01.

$$p : \bigcup_{i=1}^{h} \{s'_i, t_i\} \rightarrow \langle 0, 1 \rangle$$

$$p_i = \begin{cases} 1, & \nexists j \in \{1, \ldots, i-1\} : s'_j = s'_i \\ 1, & \exists j \in \{1, \ldots, i-1\} : ( s'_j = s'_i \wedge t_i - t_j \geq 720 ) \\ 0.1, & \exists j \in \{1, \ldots, i-1\} : ( s'_j = s'_i \wedge 720 > t_i - t_j \geq 24 ) \\ 0.01, & \exists j \in \{1, \ldots, i-1\} : ( s'_j = s'_i \wedge 24 \geq t_i - t_j ) \end{cases}$$

So after each change is added to the history, the final significance of history is computed:

$$SIG: \bigcup H \rightarrow \mathbb{R}$$

$$SIG(H) = \sum_{i=1}^{h} p_i$$

The threshold value provided guarantees that no change that was made after 30 days or more since last change of the same setting is left not backed up. Hence threshold T:

$$t \stackrel{\text{def}}{=} 1$$

Hence if *SIG (H)* ≥ t, the system creates an incremental backup and erases the history H. This allows the system to restart the whole process.

This example contains two parameters set arbitrarily that the present invention allows to learn or stabilize. These are threshold *t* and function *p*.

This example assumes that the number of epochs M is larger than 30 which statistically is considered a large number. Additionally the system can determine a distance in time between any two epochs. As a result of performing the M epochs, the state history is created. This is represented by a vector:

$$H = [S_1, S_2, \ldots, S_M]$$

$$\forall\, i \in \{1,2,\ldots,M\}: S_i = \left[v_1^i, v_2^i, \ldots, v_n^i\right], n \in \mathbb{N}$$

$$\forall\, j \in \{1,2,\ldots,n\}:$$

$v_j^i$ *is the value of setting $s_j$ contained in state $S_i$* Next changes of values are counted. Hence for each epoch i starting with second one change is determined for each setting *j*:

$$\forall\, i \in \{2,3,\ldots,M\} \land \forall\, j \in \{1,2,\ldots,n\}: c(i,j)$$

$$= \begin{cases} 0, & v_j^{i-1} = v_j^i \\ 1, & v_j^{i-1} \neq v_j^i \end{cases}, where\ c: \{2,3,\ldots,M\} \times \{1,2,\ldots,n\} \rightarrow \{0,1\}$$

And for each setting *j*, number of changes is:

$$C(j) = \sum_{i=2}^{M} c(i,j), where\ C: \{1,2,\ldots,n\} \rightarrow \{0,1,\ldots,M-1\}$$

Next M-1 groups are created so that a group of index $\gamma$ contains each, every and only settings that over all epochs changed $\gamma$ times.

$$G_\gamma = \bigcup_{j=1}^{n} \{s_j : C(j) = \gamma\}, where\ \gamma \in \{2,3,\dots,M\}$$

Hence function $p_i$ can be adopted to incorporate all factors F:

$$\forall\ s'_i \in G_\gamma : p_i = f_i, where\ f_i\ is\ the\ value\ of\ factor\ F_i$$

The last factor is threshold T of value t:

$$t \in \mathbb{R} \wedge t \geq 0$$

The resulting factors can be directly used by a one skilled in the art to perform a $2^k$ fractional or in this case a more adequate Taguchi experiment to find the optimisation for the presented factors.

Since the history storage is available even after performing the learning method, another method can be further utilized if the first one proved insufficient or was designed as such. For instance a one skilled in the art may use a Taguchi experiment to find relation between factors, based on that select starting points of values $f_i$ and $t$ and then use a neural network algorithm to further fine-tune the values.

The implementation of the invention is effected by a particular system of Fig. 1 and computer executed method of Fig 2. Thus the machine or transformation test is fulfilled and the idea is not abstract.

It can be easily recognized, by one skilled in the art, that the aforementioned method for learning of a resource management system may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A computer-implemented method for collecting and adopting data for a learning of an entity, the method comprising the steps of:

   - determining (201) the number (M) of epochs (203);
   - recording (202) the system state (160, 170) of properties (181, 191) at least once during each epoch (203), wherein (M) number of epochs are performed;
   - counting (205) how many times each property changed across all the epochs;
   - dividing (206) all of the properties contained in the system into a number of (G) groups (208);
   - translating (210) the groups (207) into factors;
   - creating (211) a threshold factor;
   - creating (212) an output measurement; and

- applying (213) a learning method.

2. The method according to claim 1, wherein recorded system state (160, 170) comprises properties IDs (161-171) and their values (162-172).

3. The method according to claim 1 or 2, wherein counting (205) is performed using a comparator (131).

4. The method according to any of previous claims, wherein the result of counting (205) is in form of a non-volatile record (204) in the system storage (150) comprising a list of all properties and their respective change counts (214).

5. The method according to any of previous claims, wherein each group (208) is a set of properties and contains those properties whose number of changes across epochs meets criteria (209) of that group.

6. The method according to any of previous claims, wherein the properties are divided (206) into equally divided groups in the following manner:

group 1: $0 \leq c < {}^{M}/_{G}$
group 2: ${}^{M}/_{G} \leq c < {}^{2M}/_{G}$
group G: $(G - 1){}^{M}/_{G} \leq c \leq M,$

wherein *c* indicates the number of changes across all epochs.

7. The method according to any of previous claims, wherein the output measurement is backup frequency or backup size or a size of an incremental backups.

8. The method according to any of previous claims, wherein the learning method is a specific experiment scheme selected from Design of Experiment theory.

9. The method according to any of previous claims, wherein the learning method is implemented by a neural network or a genetic algorithm.

10. A computer program comprising program code means for performing all the steps of the computer-implemented method according to any of claims 1-9 when said program is run on a computer.

11. A computer readable medium storing computer-executable instructions performing all the steps of the computer-implemented method according to any of claims 1-9 when executed on a computer.

12. A system for collecting and adopting data for a learning of an entity, the system comprising:

- a resource provider (110, 120) providing properties;
- a storage (150) configured to store states (160, 170) of properties;
- a time resource (140) configured to be utilized for the purpose of creating subsequent epochs;
- a function resource (130) configured to count changes of properties; and
- a controller (101) configured to perform the steps of the method of any of claims 1 to 9.

13. The system according to claim 12, wherein the function resource (130) comprises a comparator (131) configured to compare two or more values of properties and provide a result determining whether the values are same or different.

Fig. 1

200

Start

201
Determine M being the number of epochs

202
Record state of system in system storage

203
Repeat M times

150
System storage:
160 — State 1
...
170 — State M

205
Count changes of properties

206
Create groups of properties

207

Group 1
Property A

Group 2
Property B
Property C
Property A
⋮

Group 3
Property D
⋮

204
Property A
Number of changes

Property B
Number of changes

Property C
Number of changes
⋮

214

208

210
Translate groups into factors

211
Create the threshold factor containing the value of the threshold

212
Create output measurements

213
Apply learning method

End

Criterion 3

Criterion 2
209

Criterion 1

Fig. 2

Europäisches
Patentamt

European
Patent Office

Office européen
des brevets

# EUROPEAN SEARCH REPORT

Application Number

EP 14 19 8465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 8 266 291 B2 (HEIM JASON M [US]) 11 September 2012 (2012-09-11) * the whole document * ----- | 1-13 | INV. G06Q10/10 |

TECHNICAL FIELDS
SEARCHED      (IPC)

G06Q

The present search report has been drawn up for all claims

| Place of search | Date of completion of the search | Examiner |
|---|---|---|
| Munich | 15 May 2015 | Chauvet, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 19 8465

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2015

| Patent document cited in search report | | Publication date | Patent family member(s) | Publication date |
|---|---|---|---|---|
| US 8266291 | B2 | 11-09-2012 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14198454 A
- US 8266291 B